# EUROPEAN PATENT APPLICATION

(11) **EP 3 716 251 A1**
(43) Date of publication of application: **30.09.2020**
(21) Application number: 19190572.8
(22) Date of filing: 07.08.2019
(51) Int. Cl.: G09B 19/00, G09B 5/06

(54) **PERSONALIZED MAKEUP INFORMATION RECOMMENDATION METHOD**

(30) Priority: 29.03.2019 TW 108111345
(71) Applicant: CAL-COMP BIG DATA, INC, Shenkeng, New Taipei City 222 (TW)
(72) Inventor: YANG, Ren-Jie, 222 New Taipei City (TW); CHI, Min-Chang, 222 New Taipei City (TW); SHEN, Shyh-Yong, 222 New Taipei City (TW)
(74) Representative: 2K Patentanwälte Blasberg Kewitz & Reichel

(57) **Abstract**

A personalized make-up information recommendation method adopted by a make-up assisting device is disclosed. The make-up assisting device records usage data and response message of a user while using the make-up assisting device, and analyzes user preference according to the usage data and the response message. When being triggered for executing a make-up information recommendation procedure, the make-up assisting device first retrieves a preference analyzing result of the user, and then accesses a storage unit (14) for obtaining make-up appearance information relative to the preference analyzing result of the user, and displays the make-up appearance information on a display unit (11) of the make-up assisting device (1). Therefore, the user may improve his/her make-up based on the displayed make-up appearance information.

## Description

### BACKGROUND OF THE INVENTION

### 1. Technical field

The present disclosure relates to recommendation of make-up information, especially to make-up information recommendation method adopted by a make-up assisting device.

### 2. Description of Related Art

For most female, make-up is everyday practice.

In early time, the user usually sits in in front of mirror while putting on make-up, or uses the camera/display of the smart phone, the panel computer or other electronic equipment as mirror while putting on make-up.

Recently there is an assisting device to facilitate user for putting on make-up. This assisting device can provide various assisting services such as playing back make-up instruction video, providing augmented reality (AR) image for make-up appearance to let user know the simulated appearance after make-up, using make-up assisting line to facilitate the make-up procedure for user. Through the help of the assisting device, the inexperienced or unskilled user can also achieve good make-up effect.

However, different users may have different preferences (such as in favor of various kinds of video or different make-up artists) and have make-up appearance suitable to individual user. It is inconvenient to user if the above-mentioned assisting device can only provide the same video and AR image information.

### SUMMARY OF THE INVENTION

The present disclosure provides a personalized make-up information recommendation method, the method recommends relevant make-up information based on the usage data of user executing a make-up assisting device.

In one disclosed example, the make-up assisting device records usage data and response message of user executing a make-up assisting device and analyze the user preference based on the usage data and the response message. When the make-up assisting device is triggered to execute a make-up information recommendation procedure, the make-up assisting device first obtains the preference analysis result for current user and then accesses the storage unit based on the preference analysis result to obtain the relevant make-up appearance information. Afterward, the make-up assisting device displays the obtained make-up appearance information on the display unit for the reference of user.

In comparison with the related art, the present disclosure uses the make-up assisting device to analyze user preference and recommend the relevant make-up information, the user potentially-interested information can be fast and accurately provided, thus user may put on make-up according to the make-up information recommended by the make-up assisting device.

### BRIEF DESCRIPTION OF DRAWINGS

The present disclosure can be more fully understood by reading the following detailed description of the examples, with reference made to the accompanying drawings as follows:
Fig. 1 shows the schematic view of the make-up assisting device according to the first example of the present disclosure.
Fig. 2 shows the block diagram of the make-up assisting device according to the first example of the present disclosure.
Fig. 3 shows the flowchart of the recommendation method according to a first example of the present disclosure.
Fig. 4 shows the schematic view of the video tag according to the first example.
Fig. 5 shows the analysis flowchart according to the first example.
Fig. 6 shows the play-back flowchart for video according to the first example.
Fig. 7 shows the schematic view of the AR image according to the first example.
Fig. 8 shows the schematic view of the recommendation information according to the first example.
Fig. 9 shows the schematic view of the recommendation information according to the second example.
Fig. 10 shows the schematic view of the recommendation information according to the third example.
Fig. 11 shows the schematic view of the AR image according to the second example.

### DETAILED DESCRIPTION OF THE INVENTION

Reference will now be made to the drawing figures to describe the present disclosure in detail. It will be understood that the drawing figures and exemplified example of present disclosure are not limited to the details thereof.

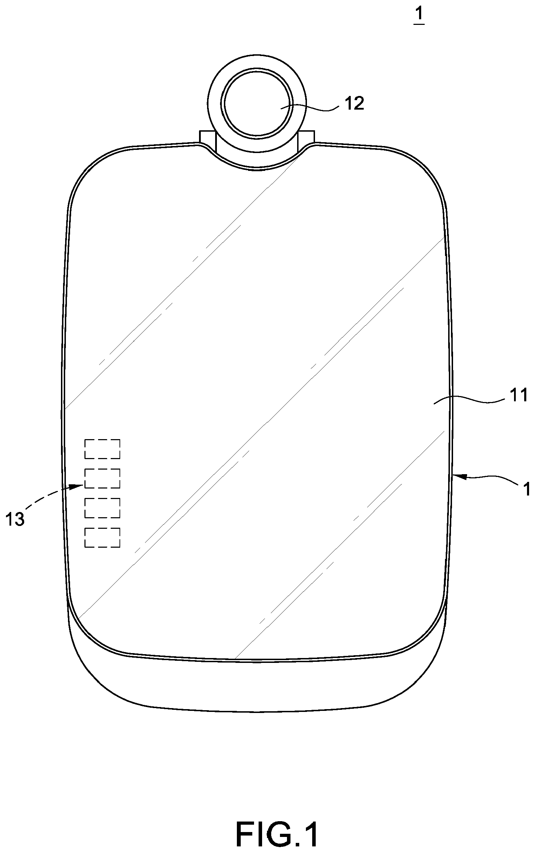

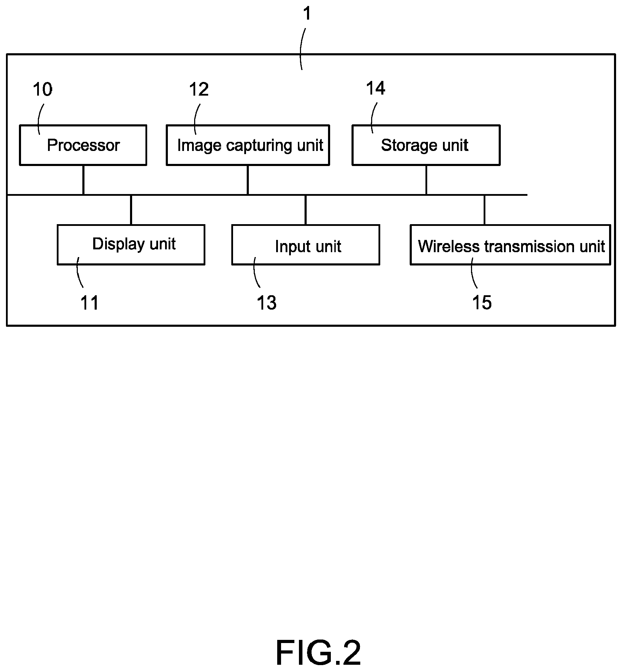

Fig. 1 shows the schematic view of the make-up assisting device according to the first example of the present disclosure. Fig. 2 shows the block diagram of the make-up assisting device according to the first example of the present disclosure.

The present disclosure describes a personalized make-up information recommendation method (hereinafter, the recommendation method), the recommendation method is mainly applied to the make-up assisting device shown in Figs. 1 and 2. The make-up assisting device 1 shown in Figs. 1 and 2 mainly facilitates the inexperienced user to put on make-up.

It should be noted that the recommendation method may also be applied to other electronic devices (such as smart mobile devices, panel computer and so on) besides above-mentioned make-up assisting device 1 as long as the electronic devices have similar hardware as that of the make-up assisting device 1 and are installed with application software for executing the control steps of the recommendation method of the present disclosure. Therefore, the application of the recommendation method of the present disclosure is not limited to the make-up assisting device 1 shown in Figs. 1 and 2, and recommendation method can be applied to various kinds of electronic devices.

As shown in Figs. 1 and 2, the above-mentioned make-up assisting device 1 mainly comprises a processor 10, a display unit 11, an image capturing unit 12, an input unit 13, a storage unit 14 and a wireless transmission unit 15. The processor 10 is electrically connected to the display unit 11, the image capturing unit 12, the input unit 13, the storage unit 14 and the wireless transmission unit 15 through bus to control and integrate those elements in integral way.

More particularly, the make-up assisting device 1 mainly uses the image capturing unit 12 to capture image of the user (mainly face image) and displays the user image on the display unit 11. Besides, the make-up assisting device 1 may use the display unit 11 to display instruction information such as directly marking the make-up region on the image or showing make-up steps/suggestion by text or graph. Therefore, the user may easily finish the make-up procedure through the help of the make-up assisting device 1.

The input unit 13 is arranged on one side of the make-up assisting device 1 and may be physical keys or touch keys. The user may interact with and operate the make-up assisting device 1 through the input unit 13 and issue command to the make-up assisting device 1.

In one example, the display unit 11 may be touch panel on which user may directly input command; therefore, the input unit 13 may be dispensed with in this example.

The storage unit 14 stores the material for assisting user to put on make-up, the material is, for example but not limited to, face image analysis software, make-up assisting software, user preference analysis algorithm, instruction video, make-up appearance information, AR image for make-up appearance, cosmetic information. It should be noted that the AR image may be pre-established and pre-stored in the storage unit 14 or may be established in real time by analyzing the instruction video and/or cosmetic information with analysis algorithm.

The make-up assisting device 1 is operatively connected to external device or remote server through the wireless transmission unit 15 to retrieve and update above material and send the make-up result of user to the external device or the remote server for data back-up.

One of the main technique features of the present disclosure is that the processor 10 may record the usage data of the user for using the make-up assisting device 1 when the user operates the make-up assisting device 1. When the operation time/frequency of the user satisfies certain preset condition (such as using times reaches 10 times, the accumulation using time exceeds 8 hours and so on), the processor 10 may use big data scheme to process all usage data of the user on the make-up assisting device to know user preference and generate preference analysis result. Therefore, the processor 10 may recommend user potentially-interested make-up information based on the preference analysis result.

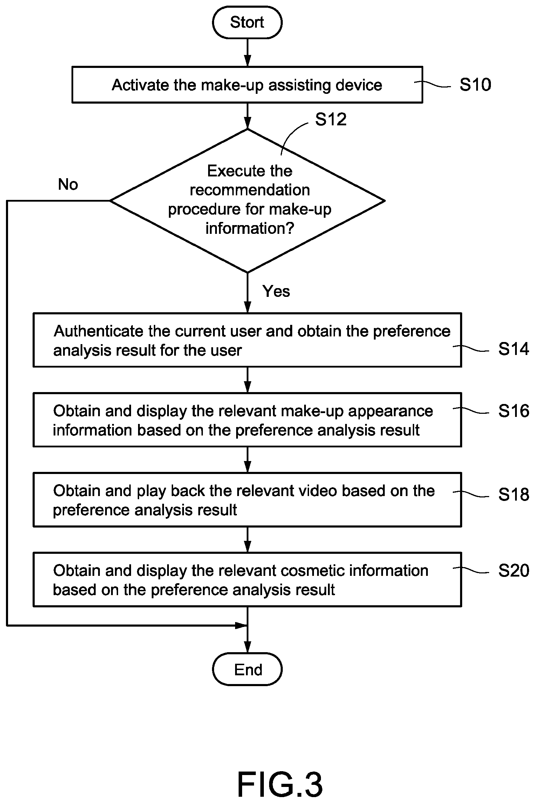

Fig. 3 shows the flowchart of the recommendation method according to a first example of the present disclosure and shows the steps relevant to the recommendation method.

As shown in Fig. 3, at first the user manually activates the make-up assisting device 1 or the make-up assisting device 1 automatically activates (step S10). The make-up assisting device 1 then determines whether it is triggered by user and needs to execute the recommendation procedure for make-up information after its activation (step S12). In the present disclosure, the recommendation procedure for make-up information is mainly provided to the user after the make-up assisting device 1 obtains (collects) user potentially-interested information.

In an example, the make-up assisting device 1 may automatically execute the recommendation procedure for make-up information when the user logs in and the user is authenticated. In another example, the make-up assisting device 1 may execute the recommendation procedure for make-up information based on control command after the user sends control command through the input unit 13 or touch panel. The above-mentioned control command is, for example but not limited to, command to request the make-up assisting device 1 to recommend make-up information (such as make-up appearance or video), or command to request the make-up assisting device 1 to enter the recommendation mode.

In the step S12, the make-up assisting device 1 mainly uses the processor 10 to determine whether the recommendation procedure for make-up information needs execution. If the processor 10 determines that the recommendation procedure for make-up information does not need execution for now, the processor 10 does not conduct any operation. If the processor 10 determines that the recommendation procedure for make-up information needs execution for now, the processor 10 first authenticates the current user and then obtains the preference analysis result for the user (step S14).

In one example, the processor 10 enquires the storage unit 14 according to user ID (such as user account) in order to fetch the pre-analyzed preference analysis result. In another example, the processor 10 is operatively connected to external device or remote server through the wireless transmission unit 15, and then fetches the preference analysis result from the external device or remote server. However, the scope of the present disclosure is not limited by above specific examples.

In the present disclosure, the main function of the make-up assisting device 1 is to facilitate the user to put on make-up. The processor 10 may continually record the usage data (such as using times, accumulated using time length, operation content) of the user on the make-up assisting device 1 when the user operates the make-up assisting device 1. When the operation behavior of the user satisfies certain condition, the processor 10 may execute the user preference analysis algorithm to process the usage data, thus generate the preference analysis result by big data analysis for the user preference. In other word, the processor 10 may generate different preference analysis result for the operation behavior of different users on the make-up assisting device 1.

After the processor 10 analyzes and generates the preference analysis result, the processor 10 selectively stores the preference analysis result to the storage unit 14 or the external device/remote server.

After obtaining the preference analysis result, the processor 10 further accesses the storage unit 14 based on the preference analysis result to obtain the relevant make-up appearance information from the storage unit 14 and to recommend/display the make-up appearance information on the display unit 11 (step S16).

More particularly, the processor 10 enquires the storage unit 14 based on the preference analysis result in the step S16, and obtains the user potentially-interested make-up appearance information. On the other hand, if the make-up assisting device 1 stores the make-up appearance information in external device/remote controller, then in the step S16 the processor 10 connects to the external device or the remote controller through the wireless transmission unit 15 in order to fetch the user potentially-interested make-up appearance information from the external device or the remote controller. The user may look over the make-up appearance information for the reference of make-up when the make-up appearance information is displayed on the display unit 11.

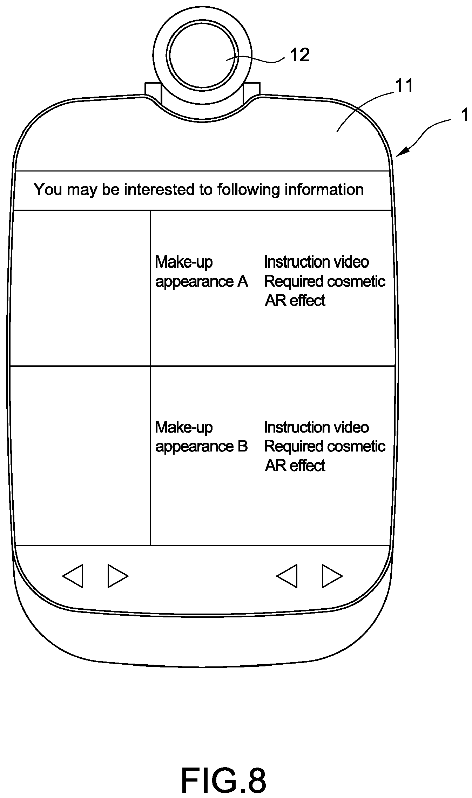

With reference also to Fig. 8, this figure shows the schematic view of the recommendation information according to the first example. In one example, the make-up appearance information may be, for example but not limited to, image comprising one or more make-up appearance (such as light make-up, heavy make-up or dinner make-up), make-up appearance introduction (such as text introduction, graph introduction or video introduction), instruction video, the required cosmetic or AR image. The make-up appearance information may be directly displayed on the display unit 11 or displayed in the form of hyperlink.

In another example, after fetching the preference analysis result for user, the processor 10 accesses the storage unit 14 based on the preference analysis result to fetch relevant video from the storage unit 14 and then recommend, display or directly play back the video on the display unit 11 (step S18). Similarly, if the make-up assisting device 1 stores the video in the external device or the remote server, the processor 10 connects to the external device or the remote controller through the wireless transmission unit 15 in order to fetch one or more video to be recommended in the step S18.

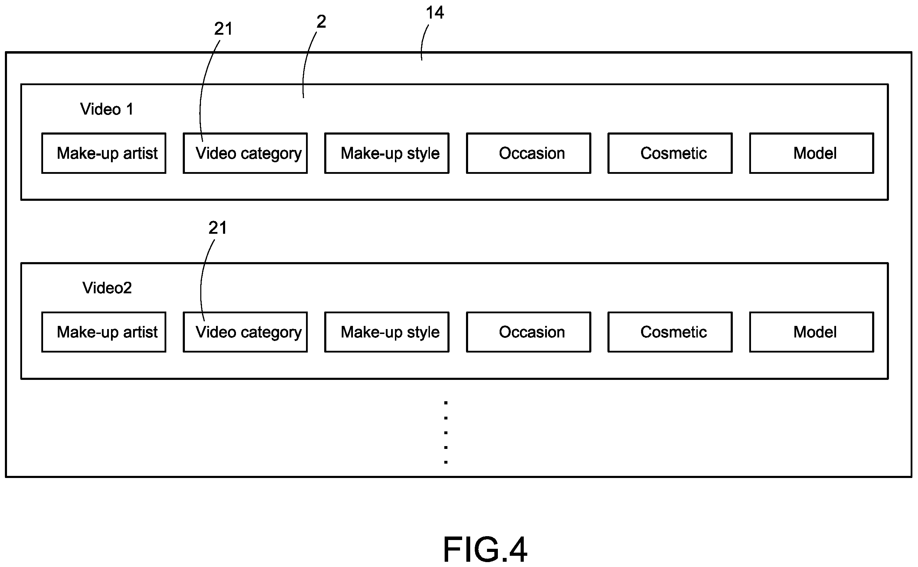

With reference also to Fig. 4, this figure shows the schematic view of the video tag according to the first example. As shown in Fig. 4, the storage unit 14 may pre-store a plurality of videos 2 and each of the videos is marked with one or more tags 21. In above-mentioned S18, the processor 10 mainly enquires the storage unit 14 based on the preference analysis result and fetches one or more video 2 with tag 21 matched with the preference analysis result.

As shown in Fig. 4, the tag 21 is set mainly base on the content and style of the video 2, and can be "make-up artist", "video category", "make-up style", "occasion", "cosmetic" or "model" and so on. In this disclosure, the processor 10 may determine the user potentially-interested information such as make-up artist, video category, make-up style, occasion, cosmetic or model based on the above-mentioned preference analysis result; and then fetch the relevant video and recommend the video based on the determination.

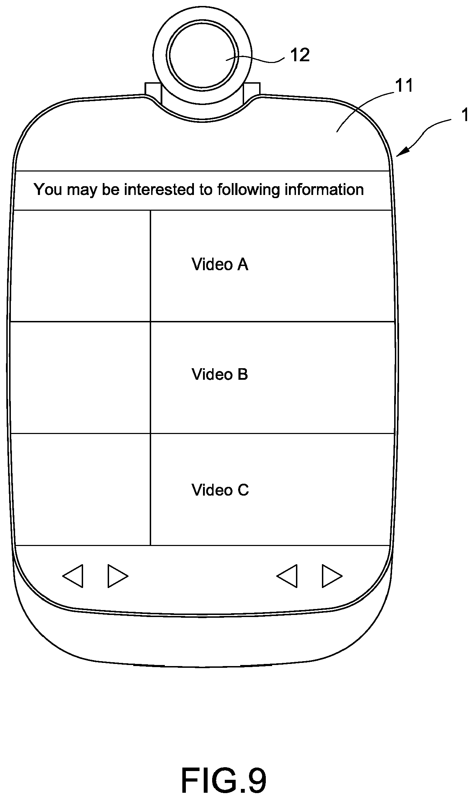

With reference also to Fig. 9, this figure shows the schematic view of the recommendation information according to the second example. As shown in the example of Fig. 9, in above step S18, the processor 10 may know the user potentially-interested make-up artist, make-up style and cosmetic based on the preference analysis result, and then recommends and plays back the demonstration video relevant to the user potentially-interested make-up artist, the instruction video of the user potentially-interested make-up style, the introduction video for the user potentially-interested cosmetic on the display unit 11.

It should be noted that the processor 10 may categorize the plurality of videos 2 in the storage unit 14 (for example, categorize the videos based on the make-up artist, the make-up style, or the cosmetic used in the video). In above-mentioned step S18, the processor 10 may fetch one or more video 2 of the same category in the storage unit 14 based on the preference analysis result to reduce accessing time and enhance the recommendation accuracy.

In another example, after fetching the preference analysis result for user, the processor 10 accesses the storage unit 14 based on the preference analysis result to fetch relevant cosmetic information from the storage unit 14 and then recommends and displays the cosmetic information on the display unit 11 (step S20). Similarly, if the make-up assisting device 1 stores the cosmetic information in the external device or the remote server, the processor 10 connects to the external device or the remote controller through the wireless transmission unit 15 in order to fetch cosmetic information to be recommended in the step S20.

More particularly, the processor 10 may determine the user potentially-interested information such as make-up artist, video category, make-up style, occasion, or cosmetic based on the above-mentioned preference analysis result and then make recommendations for cosmetic information based on the user potentially-interested information. For example, the processor 10 may recommend the cosmetic frequently used by the user potentially-interested make-up artist, the cosmetic contributing the user potentially-interested make-up style, or the cosmetic suitable for the user potentially-interested occasion.

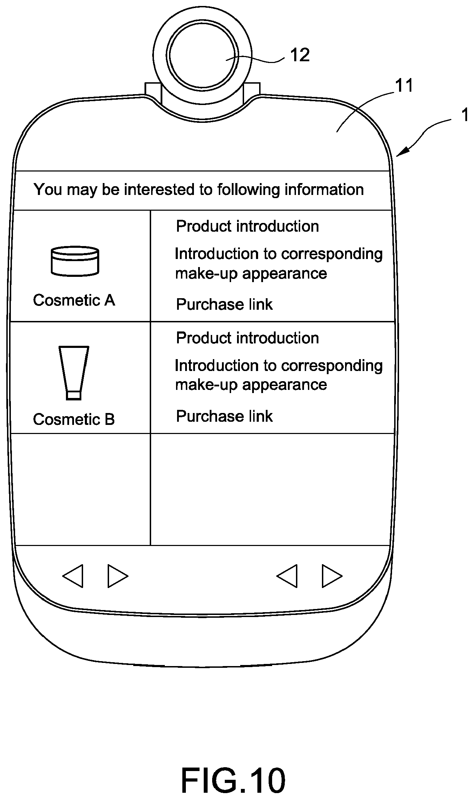

With reference also to Fig. 10, this figure shows the schematic view of the recommendation information according to the third example. As shown in the example of Fig. 10, the cosmetic information can be, for example but not limited to, the image of one or more cosmetic product, the product introduction, the introduction to corresponding make-up appearance, or the purchase hyperlink. As shown in Fig. 10, the cosmetic information can be directly shown on the display unit 11 or can be accessed through hyperlink shown on the display unit 11.

As mentioned above, in the present disclosure, before executing the recommendation procedure for make-up information, the make-up assisting device 1 receives user operation and records the usage data of the user; therefore, the make-up assisting device 1 know the user preference through analyzing a plurality of usage data.

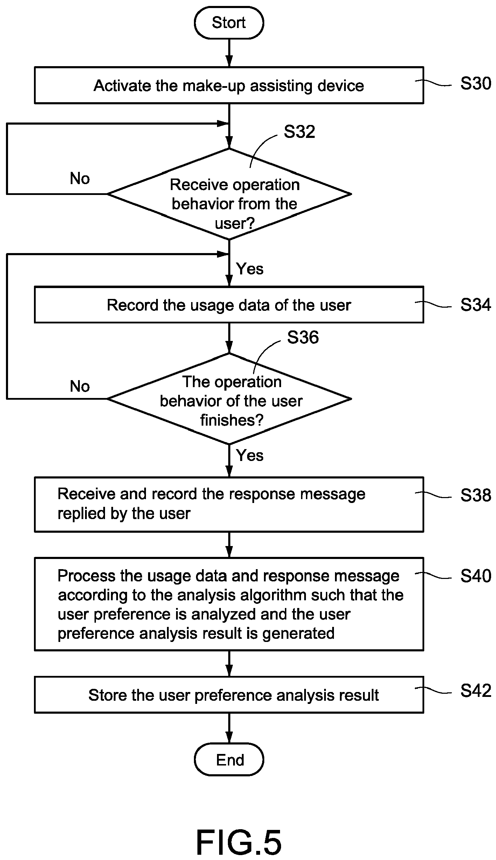

With reference to Fig. 5, this figure shows the analysis flowchart according to the first example. As shown in Fig. 5, the make-up assisting device 1 first automatically activates or is activated manually by user (S30), and the make-up assisting device 1 continually determines whether it receives operation behavior from the user (step S32). In one example, the make-up assisting device 1 uses the processor 10 to determine whether the input unit 13 thereof or touch panel receives operation behavior from the user.

If the make-up assisting device 1 does not receive operation behavior from the user, the make-up assisting device 1 keeps waiting and performs no further action. On the contrary, if the make-up assisting device 1 receives operation behavior from the user, the make-up assisting device 1 records the usage data of the user at the same time when it receives the operation behavior from the user (S34).

In one example, the operational behavior includes selecting, clicking and watching video on the make-up assisting device 1.

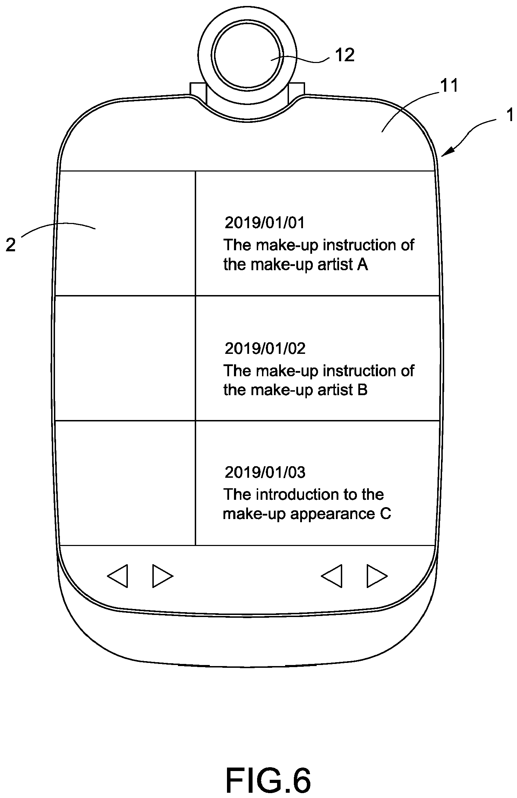

With reference to Fig. 6, this figure shows the play-back flowchart for video according to the first example. As shown in Fig. 6, after the make-up assisting device 1 activates, the user may operate the make-up assisting device 1 to enter video playback mode or instruction mode and select the required video 2 to be played back through the display unit 11. In other word, in this example, the operation behavior from the user means watching one or more video 2 (such as make-up video, introduction video or instruction video) through the display unit 11.

In the present disclosure, the processor 11 may record the usage data of the user when the user watches the above video 2, for example, the make-up artist in the watched video 2, the introduced make-up style, the used cosmetic, the model, the video category, the watching time length, whether the whole video is watched (for example, the whole video is deemed to be watched if user has watched more than 70% content of the video), the watching times, and the watching time point (such as morning or evening and so on). The above examples are only for demonstration, and the usage data of the user can be any data for identifying user preference.

It should be noted that as shown in Fig. 4, each of the video 2 is marked (labeled) with one or more tag 21. In above step S34, the processor 10 may fetch one or more tag 21 corresponding to the user selected and played-back video 2 and record the content of the tag as the above usage data (such as make-up artist tag or cosmetic tag for the video 2).

In another example, the operation behavior from the user includes selecting and using the AR video with specific make-up appearance on the make-up assisting device 1, thus simulate the appearance corresponding to the actual make-up of the user.

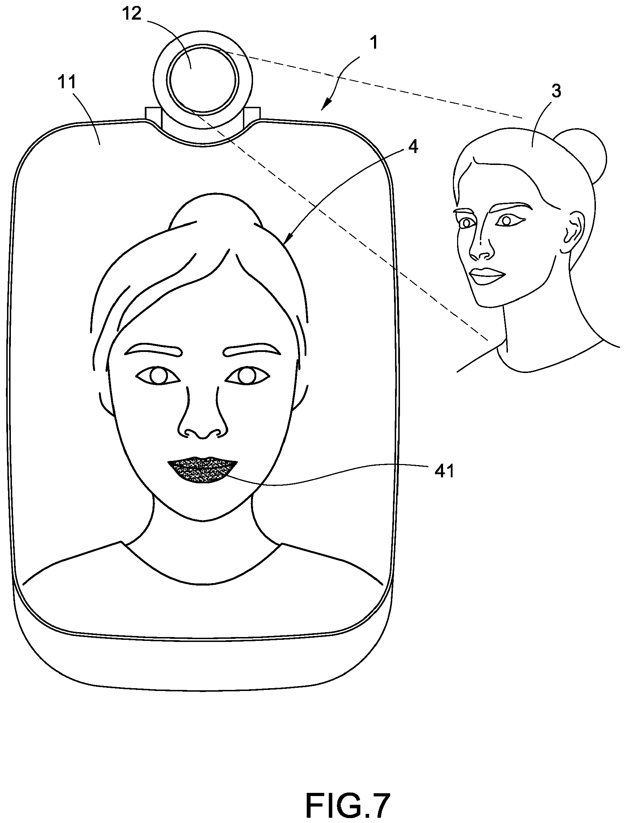

With reference to Fig. 7, this figure shows the schematic view of the AR image according to the first example. After the make-up assisting device 1 activates, the make-up assisting device 1 may be triggered by user to enter the make-up appearance simulation mode. In the make-up appearance simulation mode, the make-up assisting device 1 may use the image capturing unit 12 to capture the face image 4 of the user 3 and then display the face image 4 on the display unit 11. Besides, the user 3 operates the input unit 13 or touch panel to select the desired make-up appearance and the make-up assisting device 1 displays the AR image 41 corresponding to the user selected make-up appearance (such as the lip make-up shown in Fig. 7) on the display unit 11.

In the make-up appearance simulation mode, the user may use the input unit 13 or touch panel to adjust the size, the location or angle (orientation) of the AR image 41 such that the adjusted AR image 41 overlaps with user face image 4 and the actual make-up appearance of the user can be simulated. By the above make-up appearance simulation mode, the user may conveniently and fast determine the make-up suitable for her/him before actually putting on make-up.

In the present disclosure, the processor 10 may record the usage data of the user during the make-up appearance simulation mode. For example, the record may be whether the user 3 uses the dynamic AR image of a specific make-up appearance, the using time of the dynamic AR image, whether the user 3 uses the static AR image of a specific make-up appearance, and the using time of the static AR image. In an example, the using time may be, for example but not limited to, an accumulation time length during which the user 3 stays in the make-up appearance simulation mode.

In above example, the AR image 41 is pre-generated and pre-stored in the storage unit 14. After the make-up assisting device 1 activates and enters the make-up appearance simulation mode, the user may use the input unit 13 or touch panel to select the AR image 41 corresponding to the desired make-up appearance such that the make-up assisting device 1 conducts make-up simulation.

In another example, the above-mentioned AR image 41 can be real time generated by the processor 10, which performs image analysis for the specific video 2 (such as the user preferred video) by analysis algorithm. The detailed steps are described below.

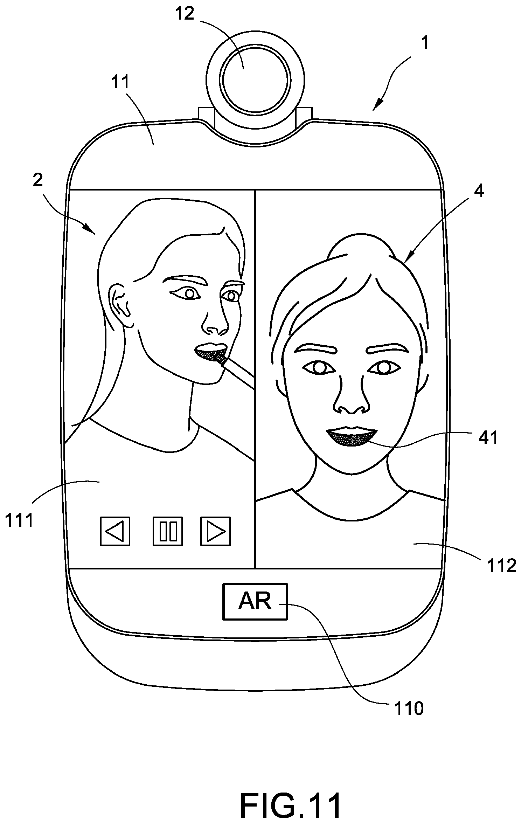

Refer both to Figs. 6 and 11 now, where Fig. 11 shows the schematic view of the AR image according to the second example. In the example shown in Fig. 11, the user may operate the make-up assisting device 1 to enter the video playback mode or the instruction mode, thus select the desired video 2 and play back the video 2 through the display unit 11.

In the playback of the video 2, if the user is interested to the make-up appearance (such as the lip make-up shown in Fig. 11) introduced in the video 2, the user may trigger the AR switch key 110 provided by the make-up assisting device 1 such that the make-up assisting device 1 generates an AR image 41 corresponding to current playback content of the video 2.

For example, if the user triggers the AR switch key 110 when the playback of video 2 pauses, the make-up assisting device 1 may generate a corresponding static AR image, where the content of the static AR image is corresponding to one or more make-up appearance (such as lip make-up, eye make-up, cheek make-up and so on) currently present in the video 2. If the user triggers the AR switch key 110 when the video 2 is playing back, the make-up assisting device 1 may generate a corresponding dynamic AR image, where the content of the dynamic AR image is corresponding to one or more make-up appearance present in the video 2 and the content of the dynamic AR image changes with the make-up appearance variations in the video 2 (namely, the dynamic AR image is synchronous with the playing time of the video 2).

More particularly, when the AR switch key 110 is triggered, the processor 10 of the make-up assisting device 1 controls the display unit to divide the screen thereof into a first window 111 and a second window 112, where the first window 111 plays back the video 2 and the second window displays the AR image real time generated by the make-up assisting device 1. In this example, the example, the make-up assisting device 1 executes the video playback mode or instruction mode on the first window and executes the make-up appearance simulation mode on the second window.

In this example, the make-up assisting device 1 performs image analysis to the content of the video 2 played back on the first window 111 through analysis algorithm to generate one or more AR image 41 corresponding to the one or more make-up appearance in the video 2 and displays the thus generated AR image 41 on the second window 112. Besides, the make-up assisting device 1 may use the image capturing unit 12 to capture the face image 4 of the user and display the face image 4 on the second window 112 at the same time (or the reflecting mirror on the front side of the make-up assisting device 1 directly reflects the face image 4 on the second window 112). Therefore, the user may move her/his body to overlap the face image with the AR image 41 displayed on the second window 112 to simulate the appearance after actual make-up.

It should be noted that the above operations may be realized in the video playback mode or instruction mode in Fig. 6 or the recommendation procedure for make-up information in Fig. 9, which will be detailed as following,

With reference both to Figs. 9 and 11, as mentioned in Fig. 9, in the recommendation procedure for make-up information, the processor 10 of the make-up assisting device 1 may obtain the information of user interested make-up artist, make-up style and cosmetic based on the preference analysis result of the user and recommend/play back the user potentially-interested video 2 on the display unit 11. Similarly, after the user selects any video 2 recommended by the make-up assisting device 1 and plays back the video, the user may trigger the AR switch key 110 when the video is played back or paused. After the AR switch key 110 is triggered, the processor 10 controls the display unit 11 to generate the above-mentioned first window 111 and the second window 112. The processor 10 performs image analysis for the video 2 on the first window 111 to real time generate the corresponding static AR image or dynamic AR image and display the AR image on the second window 112.

Similarly, the processor 10 further activates the image capturing unit 12 to capture the face image 4 of the user and displays the face image 4 on the second window 112 at the same time (or the reflecting mirror on the front side of the make-up assisting device 1 directly reflects the face image 4 on the second window 112). Therefore, the user may simulate the make-up appearance after actually putting on at any time when the user watches the video 2 recommended by the make-up assisting device 1.

It should be noted that the above operation may be realized in the recommendation procedure for make-up information in Fig. 10. More particularly, when the make-up assisting device 1 executes the recommendation procedure for make-up information and recommends/displays the user potentially-interested cosmetic information on the display unit 11, the user may trigger the AR switch key 110 such that the processor 10 performs analysis on the cosmetic information by analysis algorithm and generates the corresponding AR 41. In this example, the AR image 41 generated by the processor 10 is mainly static AR image 41.

In one example, the user may select one make-up portion by herself/himself, and the processor 10 may generate an AR image 41 corresponding to user selected make-up portion (such as lip) based on the content of the cosmetic information. In another example, the processor 10 may actively analyze the detailed data in the cosmetic information to identify the application portion of the cosmetic information such that the AR image 41 corresponding to the application portion of the cosmetic information can be dynamically generated.

In this example, the make-up assisting device 1 may use a single display unit 11 to display the above-mentioned AR image 41, or use the above-mentioned first window 111 and the second window 112 to display both the user selected cosmetic information and the AR image 41.

After the make-up assisting device 1 displays the above-mentioned AR image 41, the processor 10 may use the image capturing unit 12 to capture the face image 4 of the user and display the face image 4 on the display unit 11 or the second window 112. Therefore, the user may actually simulate the appearance of the specific make-up portion after putting on the cosmetic.

However, the above example is only for demonstration, the usage data can broadly refer to any data for identifying user preference and is not limited to above example.

With reference back to Fig. 5, in this example, the processor 10 may continually determine whether the operation behavior of the user finishes (step S36), namely, determine whether the user quit the above-mentioned video playback mode, instruction mode or make-up appearance simulation mode. If the operation behavior of the user dos not finish, then the processor 10 continually records the usage data of the user. On the contrary, if the operation behavior of the user finishes, then the processor 10 performs following steps.

After the step S36, the processor 10 processes the plurality of usage data according to the analysis algorithm such that the user preference can be analyzed and the user preference analysis result can be generated (step S40). Besides, the processor 10 selectively store the user preference analysis result to the storage unit 14 (step S42), or sends the user preference analysis result to the external device or the remote server through the wireless transmission unit 15.

It should be noted that the processor 10 receives and records the response message replied by the user (step S38) after the processor 10 determines that the operation behavior of the user finishes. In the above step S40, the processor 10 may analyze the user preference to generate the user preference analysis result based on both the plurality of the usage data and the response message at the same time, therefore, the user preference analysis result generated is much fit for user actual preference.

In one example, the processor 10 may display questionnaire on the display unit 11 and get the reply of user to the questionnaire by the input unit 13 (or the touch panel) after the processor 10 determines that the operation behavior of the user finishes. For example, the questionnaire may include "Do you like the video watched a moment ago", "Do you like the make-up style introduced in the video", or "Do you want to buy the cosmetic used in the video" and so on. The input parameter or input weight of the analysis algorithm can be set according to the user reply (namely the response message) to get more accuracy user preference analysis result.

In one example, the user preference analysis result includes the user-interested make-up artist, make-up style, video category, make-up suitable for certain occasion, cosmetic or model and so on. When performing the step S16-S20 in Fig. 3 based on the user preference analysis result, the processor 10 mainly enquires the storage unit 14 according to the above user-interested make-up artist, make-up style, video category, make-up suitable for certain occasion, cosmetic or model information to fetch the video 2 with the corresponding tag 21 and make-up information/cosmetic information matched with those information. Therefore, the personalized makeup information recommendation can be made for individual user.

By the present disclosure, the users may quickly obtain their interested make-up information through the make-up assisting device, thus provide much convenience for them.

## Claims

1. A personalized make-up information recommendation method adopted by a make-up assisting device (1), the make-up assisting device (1) including at least a processor (10), a display unit (11) and a storage unit (14), the method comprising:
a) after activating the make-up assisting device (1), determining whether the make-up assisting device (1) is triggered to execute a make-up information recommendation procedure;
b) the processor (10) obtaining a preference analysis result for a current user when executing the make-up information recommendation procedure, wherein the processor (10) records a usage data of the user on the make-up assisting device (1) and analyzes the usage data of the user to obtain the preference analysis result;
c) the processor (10) accessing the storage unit (14) based on the preference analysis result to obtain a relevant make-up appearance information; and
d) the processor (10) displaying the make-up appearance information on the display unit (11).

2. The method in claim 1, wherein the preference analysis result is at least one of user-interested make-up artist, make-up style, video category, make-up suitable for a specific occasion, cosmetic and model.

3. The method in claim 1, wherein the make-up appearance information is at least one of image comprising one or more make-up appearance, make-up appearance introduction, instruction video, required cosmetic and augmented reality (AR) image (41).

4. The method in claim 1, wherein in the step c), the processor (10) further accesses the storage unit (14) based on the preference analysis result to obtain a relevant video (2); in the step d), the processor (10) plays back the video (2) on the display unit (11).

5. The method in claim 4, wherein the storage unit (14) is configured to store a plurality of videos (2) and each of the videos (2) has one or more tag (21); in the step c), the processor (10) obtains one or more videos (2) in the storage unit (14) and the one or more videos (2) has tag (21) matched with the preference analysis result.

6. The method in claim 5, wherein a content of the tag (21) comprises at least one of user-interested make-up artist, make-up style, video category, make-up suitable for a specific occasion, cosmetic and model.

7. The method in claim 1, wherein in the step c), the processor (10) further accesses the storage unit (14) based on the preference analysis result to obtain a relevant cosmetic information; in the step d), the processor (10) displays the cosmetic information on the display unit (11).

8. The method in claim 7, wherein the cosmetic information comprises at least one of image of one or more cosmetic product, product introduction, introduction to corresponding make-up appearance, and a purchase hyperlink.

9. The method in claim 1, wherein the processor (10) further receives and records a response message of the user (3) after the user operates the make-up assisting device (1); and in the step b), the processor (10) generates the preference analysis result based on the usage data and the response message of the user.

10. The method in claim 1, further comprising following steps before the step b):
b01) the processor (10) determining whether the make-up assisting device (1) receives an operation behavior from the user (3);
b02) the processor (10) recording the usage data when receiving the operation behavior;
b03) the processor (10) processing the usage data through analysis algorithm to analyze a preference of the user (3) and generate the preference analysis result;
b04) the processor (10) storing the preference analysis result in the storage unit (14).

11. The method in claim 10, wherein the operation behavior comprises watching one or more video (2) through the display unit (11).

12. The method in claim 11, wherein the usage data comprises at least one of make-up artist in the video (2), introduced make-up style in the video (2), cosmetic used in the video (2), model appearing in the video (2), video category, watching time length, watching times, and watching time point.

13. The method in claim 10, wherein the operation behavior comprises fetching a face image (4) of the user (3) through an image capturing unit (12) of the make-up assisting device (1) and displaying both the face image (4) and an AR image (41) of a specific make-up appearance on the display unit (11) to simulate user appearance after putting on the specific make-up appearance.

14. The method in claim 13, wherein the usage data comprises at least one of a dynamic AR image using the specific make-up appearance, a using time of the dynamic AR image, a static AR image using the specific make-up appearance, and a using time of the static AR image.

15. The method in claim 10, further comprises:
b05) the processor (10) receiving and recording a response message of the user (3) after the operational behavior finishes, and in the step b03), the processor (10) generates the preference analysis result based on the usage data and the response message of the user (3).
